Europäisches Patentamt

European Patent Office

Office européen des brevets

(19)

(11) Veröffentlichungsnummer: **0 212 417**
**B1**

(12) # EUROPÄISCHE PATENTSCHRIFT

(45) Veröffentlichungstag der Patentschrift:
**11.01.89**

(21) Anmeldenummer: **86110761.3**

(22) Anmeldetag: **04.08.86**

(51) Int. Cl.⁴: **F01D 17/00**, G05D 13/62,
H02J 3/06

(54) Einrichtung zur Regelung von Turbogeneratoren.

(30) Priorität: **16.08.85 DE 3529291**

(43) Veröffentlichungstag der Anmeldung:
**04.03.87 Patentblatt 87/10**

(45) Bekanntmachung des Hinweises auf die Patenterteilung:
**11.01.89 Patentblatt 89/2**

(84) Benannte Vertragsstaaten:
**AT BE CH DE FR GB IT LI LU NL SE**

(56) Entgegenhaltungen:
EP-A- 0 066 651
DE-A- 2 627 591
FR-A- 2 378 943
US-A- 3 097 488

**SIEMENS ZEITSCHRIFT, Band 33, Nr. 5, Mai 1959,
Seiten 325-337, Erlangen, DE; F. MAIER: "Praktische
Netzkennlinienregelung"**

(73) Patentinhaber: **Siemens Aktiengesellschaft Berlin und
München, Wittelsbacherplatz 2, D-8000 München 2(DE)**

(72) Erfinder: **Diegel, Dieter, Dipl.-Ing., Altenseestrasse 10,
D-8551 Röttenbach(DE)**
Erfinder: **Plohn, Gerhard, Dipl.-Ing., Schwanenstrasse 4,
D-8520 Erlangen(DE)**
Erfinder: **Schuh, Manfred, (verstorben)(DE)**
Erfinder: **Schuh, Gisela, Wehneltstrasse 16,
D-8520 Erlangen(DE)**
Erfinder: **Schuh, Sabine, Wehneltstrasse 16,
D-8520 Erlangen(DE)**
Erfinder: **Schuh, Michael, Wehneltstrasse 16,
D-8520 Erlangen(DE)**

**Beschreibung**

Die Erfindung betrifft eine Einrichtung zur Regelung von Turbogeneratoren mit einem Drehzahl- und einem Leistungsregler, welche jeweils Integralverhalten aufweisen.

Eine derartige Regeleinrichtung ist nach der DE-OS 2 627 591 bekannt. Drehzahl- und Leistungsregler bilden dort separate, funktionell voneinander unabhängige Einheiten, welche sich in der Bereitstellung der Stellgröße über eine Minimalwert-Auswahlschaltung ablösen. Es ist dort also stets nur ein Regler im Eingriff, während die Ausgangsgröße des nicht im Eingriff befindlichen Reglers dem führenden Regler mittels besonderer Begrenzerschaltungen über den gesamten Arbeitsbereich nachgeführt wird, um stoßartige Stellbefehle beim Übergang von der einen auf die andere Regelungsart zu vermeiden.

Aufgabe der vorliegenden Erfindung ist es, bei einer Regeleinrichtung der eingangs genannten Art ohne eine Minimalwert-Auswahlschaltung oder sonstige Umschaltungen zwischen Leistungs- bzw. Drehzahlregler auszukommen und die oft zu dynamischen Problemen führende Nachführung des jeweils nicht im Eingriff befindlichen Reglers zu vermeiden. Gelöst wird diese Aufgabe erfindungsgemäß durch die im kennzeichnenden Teil des Hauptanspruches angegebenen Merkmale. Bei einer derartigen Struktur der Regeleinrichtung ergibt sich der Vorteil, daß stets beide Regler zusammen wirken und die Funktionen der betriebsmäßig vorzusehenden Drehzahl- und Leistungsregelung voll erhalten bleiben, so daß die Stabilität nicht nur in den beiden Grenzfällen des Netzes – ohmsche Insel und starres Netz – sichergestellt werden kann, sondern praktisch auch in allen dazwischenliegenden Betriebsfällen. Es brauchen bei einer Änderung der Netzverhältnisse die Parameter des Leistungs-Drehzahlreglers nicht verstellt zu werden und es erübrigt sich daher auch eine solche Parameterverstellung einleitende Netzerkennungsschaltung.

Die Erfindung samt ihren weiteren Ausgestaltungen, welche in Unteransprüchen gekennzeichnet sind, soll nachfolgend anhand der Figuren näher erläutert werden.

Es zeigen:

Figur 1 die prinzipielle Struktur der erfindungsgemäßen Regeleinrichtung für die Kombination eines allgemeinen Leistungsreglers mit einem PI-Verhalten aufweisenden Drehzahlregler,
Figur 2 ein spezielles Ausführungsbeispiel der Erfindung in Verbindung mit einem Turbogenerator,
Figur 3 ein Diagramm zum Betriebsverhalten des erfindungsgemäßen Drehzahl-Leistungsreglers und
Figur 4 eine Zusatzeinrichtung zur Drehzahlbegrenzung der Turbine.

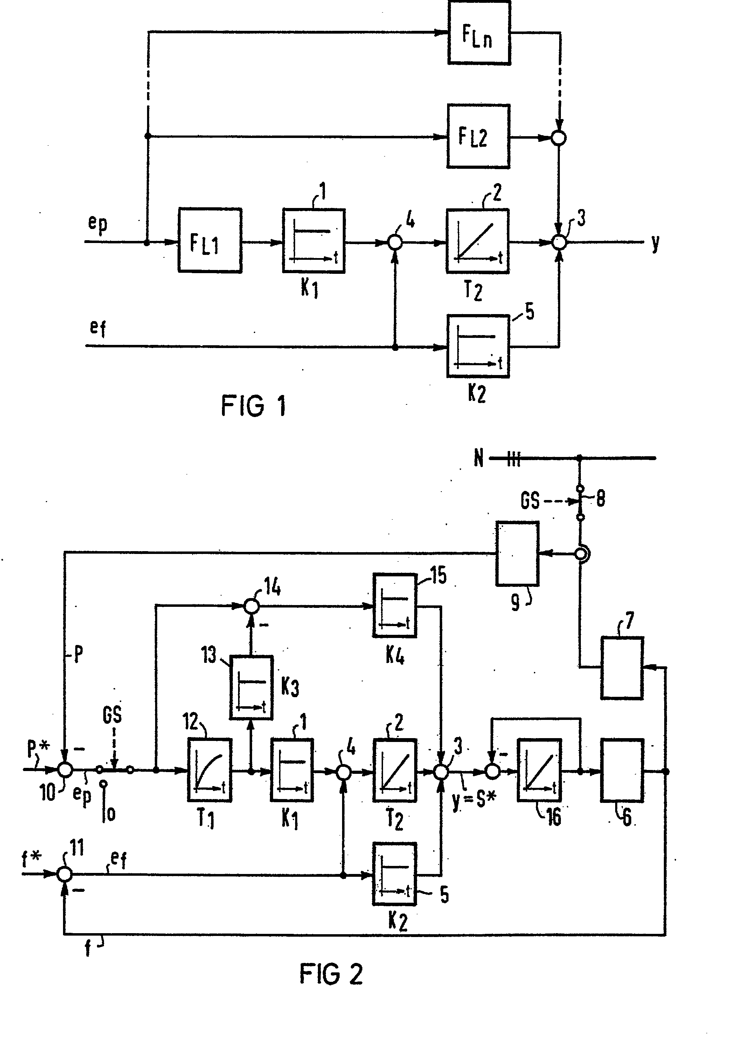

Gemäß Figur 1 besteht der Leistungsregler aus einer Anzahl von parallel von der Leistungsabweichung $e_p$, d.h. von der Differenz zwischen einem vorgegebenen Sollwert und dem Istwert der von der Turbine abgegebenen Leistung, beaufschlagten Regelkreisgliedern mit den allgemeinen Übertragungsfunktionen FL2 bis FLn, deren Ausgangssignale zu einem Summensignal zusammengefaßt sind. Parallel zu diesen allgemeinen Regelkreisgliedern ist ein weiterer Reglerzweig vorgesehen, welcher aus dem allgemeinen Regelkreisglied mit der Übertragungsfunktion FL1, einem Proportionalglied 1 mit der Verstärkung $K_1$ und einem Integrator 2 mit der Integrierzeit $T_2$ besteht. Das Summensignal der Regelkreisglieder mit den Übertragungsfunktionen FL2 bis FLn wird in einem Mischglied 3 zu dem Ausgangssignal des Integrators 2 addiert. Für den Fall, daß der in Figur 1 dargestellte Leistungsregler speziell als ein PID-Regler ausgebildet werden soll, würde der den Integrator 2 enthaltende Reglerzweig den Integralteil bereitstellen und zwei diesem Zweig parallel angeordnete Zweige würden ein P- bzw. ein PD-Glied enthalten.

Der Integrator 2 wird nun gleichzeitig zum Aufbau eines Drehzahl- bzw. Frequenzreglers herangezogen, indem mittels eines Mischgliedes 4 dem Integrator 2 additiv das Drehzahl- bzw. Frequenzabweichungssignal $e_f$ und die von einem Proportionalglied 5 mit der Verstärkung $K_2$ verstärkte Frequenzabweichung $e_f$ dem Mischglied 3 zugeführt wird. In Bezug auf die Frequenzabweichung $e_f$ stellt somit die aus dem Integrator 2 und dem Proportionalglied 5 bestehende Anordnung einen Regler mit PI-Verhalten dar, während die Leistungsabweichung $e_p$ von einem Leistungsregler mit beliebig anders wählbarem Übertragungsverhalten verarbeitet wird. Im Ausgangssignal y des Drehzahl-Leistungsreglers sind also die Ausgangssignale von zwei verschiedenen Reglertypen überlagert bzw. linear miteinander verknüpft, wobei die Integralteile der beiden Regler von dem ihnen gemeinsamen Integrator 2 gebildet werden.

Figur 2 zeigt ein detaillierteres Ausführungsbeispiel zur Regelung eines aus einer Turbine 6 und einem mit ihr gekuppelten Synchrongenerator 7 bestehenden Turbosatzes, welcher über einen Generatorschalter in ein mit N bezeichnetes Netz einspeist. Es ist ein Leistungsmeßgerät 9 vorgesehen, mit welchem die von dem Generator abgegebene Leistung P erfaßt und in einem Mischglied 10 mit einem vorgegebenen Sollwert P* verglichen wird, so daß das Signal $e_p$ die Leistungsabweichung von dem vorgegebenen Sollwert P* ist. Das Leistungsabweichungssignal $e_p$ wird dem Leistungsregler über einen mit dem Signal GS betätigbaren Schalter zugeführt, wobei mit diesem Signal auch der Generatorschalter 8 betätigt wird. Zum Hochfahren der Turbine bis zur Synchronisation mit dem Netz N ist das Signal GS wirksam, womit der Generatorschalter 8 geöffnet und das Eingangssignal des Leistungsreglers den Wert Null erhält, so daß nur der Drehzahlregler wirksam ist, während bei geschlossenen Generatorschalter 8 das Leistungsabweichungssignal $e_p$ auf den Eingang des Leistungsreglers wirkt. Als weitere Eingangsgröße für den Drehzahl-Leistungsregler wird die Drehzahl- bzw. Frequenzabweichung $e_f$ in einem weiteren Mischglied 11 gebildet, dem ein Frequenzsollwert f* und ein der Frequenz der von dem Synchrongenerator 7 abgegebenen Spannung entsprechender Frequenzistwert f zugeführt ist. Der Drehzahl-Leistungsregler, dessen mit 1 bis 5 bezeichnete Regelkreisglieder mit den in Figur 1 gleichbezeichneten Elementen übereinstimmen, weist bei dem in Figur 2 dargestellten Beispiel ein Verzögerungsglied 12 mit der Zeitkonstanten $T_1$ auf, dem die Leistungsabweichung $e_p$ zugeführt ist. Das Ausgangssignal des Verzögerungsgliedes 12 wird den Eingängen des Proportionalgliedes 1 und eines weiteren Proportionalgliedes 13 mit der Verstärkung $K_3$ zugeführt, dessen Ausgangssignal in einem Mischglied 14 von der Leistungsabweichung $e_p$ subtrahiert wird. Das Ausgangssignal des Mischgliedes 14 wird über ein Proportionalglied 15 mit dem Verstärkungsfaktor $K_4$ additiv dem Mischglied 3 zugeführt, an dessen zwei weiteren Eingängen entsprechend der in Figur 1 dargestellten Anordnung das Ausgangssignal des Integrators 2 und das Ausgangssignal des Proportionalgliedes 5 angeschlossen sind. Das Summenausgangssignal y des Mischgliedes 3 dient als Stellungssollwert $S^*$ für eine dem Drehzahl-Leistungsregler unterlagerte Stellungsregelung, welche mit dem rückgekoppelten Integrator 16 angedeutet ist und eine entsprechende Öffnung der Turbinenstellventile bewirkt.

Mit der in Figur 2 dargestellten Struktur des Leistungsreglers läßt sich eine Übertragungsfunktion realisieren, welche in ihrem Zähler dem Nenner der Übertragungsfunktion des Turbogenerators 6, 7 entspricht und damit ein dynamisch stabiles Verhalten sichert. Regelungstechnisch gesehen stellt der Turbogenerator, bestehend aus Turbine 6 und Synchrongenerator 7 ein Schwinger zweiter Ordnung dar, welcher mit den Kenngrößen Resonanzfrequenz und Dämpfungsgrad definiert ist. Es wird daher die Zeitkonstante $T_1$ des Verzögerungsgliedes 12 des Leistungsreglers so bemessen, daß sie dem Kehrwert der Resonanzfrequenz des Turbogenerators entspricht, während für die Gewichtung des Ausgangssignales des Verzögerungsgliedes 12 durch das Proportionalglied 13 gilt $K_3 = 1 - 2D$, wobei D der Dämpfungsgrad des Turbogenerators ist. Wird nun die Integrierzeit $T_2$ des gemeinsamen Integrators 2 entsprechend $T_2 = K_1/K_4 \cdot T_1$ bemessen, so läßt sich zeigen, daß sich für die Übertragungsfunktion $F_L$ des Leistungsreglers mit s als Laplace-Operator $F_L = K_4 \cdot (1 + 2DT_1s + T_1{}^2 s^2)/((1 + T_1s) \cdot T_1s)$ ergibt. Die Verstärkung $K_4$ des Proportionalgliedes 15 ist wählbar und wird entspechend dem gewünschten Einschwingverhalten eingestellt, während mit $K_1$ der sogenannte Primäreinfluß (Statik), d.h. die Abhängigkeit der von dem Turbogenerator abgegebenen Leistung von der Netzfrequenz vorgegeben werden kann. Der aus dem Integrator 2 und dem Proportionalglied 5 bestehende PI-Drehzahlregler hat die Übertragungsfunktion $F_D = K_2 (1 + K_2 \cdot T_2s)/K_2 \cdot T_2s$, wobei hierbei der Verstärkungsfaktor $K_2$ wählbar ist.

Soll der Drehzahl-Leistungsregler entsprechend Figur 2 mittels der bei der in Figur 1 dargestellten Struktur mit nichtvermaschten Parallelzweigen aufgebaut werden, so muß dort das dem Proportionalglied 1 vorgeordnete Regelkreisglied die Übertragungsfunktion $F_{L1} = 1/(1 + T_1 \cdot s)$ haben und als einziges Parallelglied wäre ein solches mit der Übertragungsfunktion $F_{L2} = K_4 (2D + T_1 \cdot s)/(1 +$ $T_1s)$ vorzusehen. Die in Figur 2 wiedergegebene Ausführung des Leistungsreglers weist demgegenüber jedoch den Vorteil auf, daß nur ein einziges, auf den Kehrwert der Resonanzfrequenz des Turbogenerators abgestimmtes Zeitglied mit der Zeitkonstanten $T_1$, nämlich das Verzögerungsglied 12, realisiert werden muß.

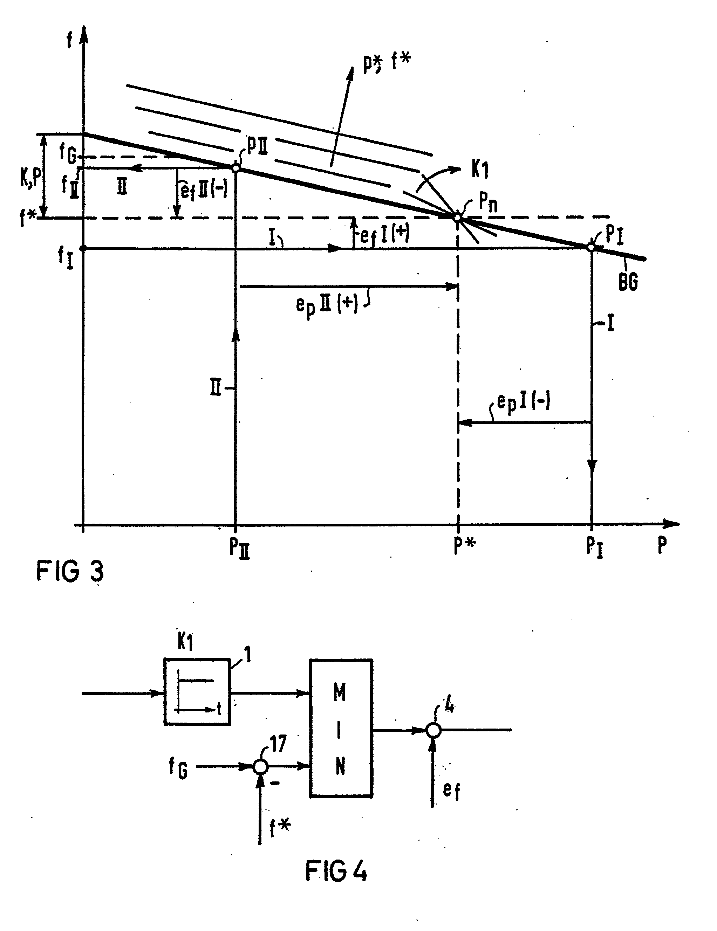

Figur 3 zeigt ein Diagramm zum Betriebsverhalten des mit der erfindungsgemäßen Drehzahl-Leistungsregler ausgestatteten Turbogenerators. Ein stabiler Betriebszustand stellt sich dabei dann ein, wenn die Eingangsgröße des gemeinsamen Integrators den Wert Null erreicht, wenn also

$$e_p \cdot K_1 + e_f = 0 \quad \text{bzw.}$$
$$f = -K_1 P + f^* + K_1 \cdot P^* \tag{1}$$

gilt, wobei f bzw. P die Istwerte und $f^*$ bzw. $P^*$ die Sollwerte von Frequenz bzw. Wirkleistung sind. Die Gleichung (1) wird im Diagramm der Figur 3 durch die Betriebsgerade BG dargestellt. Durch Vergrößern des Proportionalitätsgrades $K_1$ kann die Betriebsgerade BG, wie angedeutet, geschwenkt werden, während sich bei Veränderung der Parameter $P^*$ und $f^*$ eine entsprechende Parallelverschiebung dieser Betriebsgeraden ergeben würde. Für den Fall, daß der Turbogenerator im Verbund mit anderen Stromerzeugern auf ein gemeinsames Netz arbeitet, dessen Frequenz mit dem dem Turbogenerator vorgeschriebenen Frequenzsollwert $f^*$ übereinstimmt, stellt sich der stationäre Betriebspunkt Pn ein, bei dem die von dem Turbogenerator abgegebene elektrische Wirkleistung übereinstimmt mit dem ihm vorgegebenen Leistungssollwert $P^*$. Hierbei sind Frequenz- und Leistungsabweichung gleich Null. Sinkt infolge einer plötzlichen Leistungsanforderung die Netzfrequenz f beispielsweise auf den Wert $f_l$, dann stellt sich ein neuer Betriebspunkt $P_l$ ein, bei dem der Turbogenerator zusätzlich zu dem ihm vorgeschriebenen Leistungssollwert $P^*$ einen Leistungsbeitrag zur Netzstützung liefert, welcher abhängig ist von dem den Primäreinfluß (Statik) bestimmenden Wert. Gleichzeitig tritt eine positive Frequenzabweichung $e_f l(+)$ auf, welche die mit dem Faktor $K_1$ multiplizierte negative Leistungsabweichung $e_p l(-)$ im Eingangskreis des Integrators 2 kompensiert. Analog ergibt sich bei einer Frequenzerhöhung des Verbundnetzes eine entsprechende Verminderung der vom Turbosatz abgegebenen Leistung, so daß dieser nun weniger Leistung in das Netz liefert, als ihm durch den Sollwert $P^*$ vorgeschrieben wird.

Für den Fall, daß der Turbogenerator auf ein Inselnetz, d.h. nicht im Verbund mit anderen Stromerzeugern arbeitet, ist die von den an dieses Inselnetz angeschlossenen Verbrauchern abgenommene Leistung die unabhängige Variable und es stellt sich beispielsweise bei einer solchen Leistung $P_{ll}$ der Betriebspunkt $P_{ll}$ auf der Betriebsgeraden BG ein, dem die Frequenz $f_{ll}$ entspricht. Es ergibt sich also eine positive Leistungsabweichung $e_p ll(+)$ und eine negative Drehzahl- bzw. Frequenzabweichung $e_f ll(-)$, deren Einflüsse sich wiederum im Eingangskreis des Integrators 2 aufheben. Durch die Wirkung des zentralen, gemeinsamen Integrators 2 ist also stets das Erreichen stabiler stationärer Betriebspunkte $P_n$, $P_I$, $P_{II}$ gewährleistet.

Wenn die bei zu großer Entlastung des Turbogenerators im Inselbetrieb entsprechend der Betriebsgeraden BG erfolgende Frequenzüberhöhung über die Sollfrequenz $f^*$ nicht hingenommen werden kann, ist es zweckmäßig, für eine Frequenz- bzw. Drehzahlbegrenzung der Turbine auf einen bestimmten Grenzwert $f_G$ zu sorgen. Anstatt für diese Fälle eine besondere Grenzwertregelung einzusetzen, kann dies wesentlich einfacher durch die in Figur 4 gezeigte Zusatzeinrichtung erfolgen, gemäß der zwischen dem Proportionalglied 1 und dem Summierglied 4 eine mit MIN bezeichnete Minimalwert-Auswahlschaltung vorgesehen wird, die vom Ausgangssignal des Proportionalgliedes $K_1$ und vom Ausgangssignal eines Mischgliedes 17 beaufschlagt wird, dem eingangsseitig die Differenz zwischen dem konstanten Grenzfrequenzwert $f_G$ und dem Sollwert $f^*$ zugeführt ist. Da die Minimalwert-Auswahlschaltung MIN jeweils nur das kleinere ihrer Eingangssignale durchläßt, hat die in Figur 4 dargestellte Ergänzung die Wirkung, daß ab einer bestimmten positiven Leistungsabweichung anstelle des Ausgangssignales des Proportionalgliedes $K_1$ das Ausgangssignal des Summiergliedes 17 von der Minimalwert-Auswahlschaltung durchgelassen wird, so daß sich am Ausgang des Mischgliedes 4 ein Signal der Größe $f - f_G$ ergibt, mit dem der Integrator 2 solange verstellt wird, bis dieses Signal zu Null geworden ist, d.h. $f = f_G$ wird. Es wird also bei Unterschreiten einer bestimmten Abgabeleistung die Frequenz-Leistungsregelung in eine integral wirkende Drehzahlregelung auf den vorgeschriebenen Frequenzwert $f_G$ übergeleitet, womit die Turbinendrehzahl zuverlässig begrenzt werden kann.

## Patentansprüche

1. Regeleinrichtung für Turbogeneratoren mit einem Drehzahl- und einem Leistungsregler, welche jeweils Integralverhalten aufweisen, gekennzeichnet durch folgende Merkmale:
a) Der Integralteil des Drehzahl- und des Leistungsreglers wird mittels eines gemeinsamen Integrators (2) gebildet;
b) ein von der Leistungsabweichung ($e_p$) abgeleitetes Signal wirkt über ein erstes Proportionalglied (1) auf den Eingang des gemeinsamen Integrators (2), dem zusätzlich additiv die Drehzahlabweichung ($e_f$) unmittelbar zugeführt ist;
c) die Drehzahlabweichung ($e_f$) wird außerdem dem Eingang eines zweiten, die Proportionalverstärkung ($K_2$) des Drehzahlreglers bildenden Proportionalgliedes (5) zugeführt, dessen Ausgangssignal in einem Mischglied (3) zum Ausgangssignal des gemeinsamen Integrators (2) addiert wird, wobei das Summenausgangssignal des Mischglieds (3) als Stellgröße (y) oder als Stellungssollwert ($S^*$) dient.
2. Regeleinrichtung nach Anspruch 1, gekennzeichnet durch folgende Merkmale:
a) Dem ersten Proportionalglied (1) wird die Lei-stungsabweichung ($e_p$) über ein Verzögerungsglied erster Ordnung (12) zugeführt, dessen Zeitkonstante ($T_1$) dem Kehrwert der Resonanzfrequenz des Turbogenerators (6, 7) entspricht;
b) ein mittels eines dritten Proportionalgliedes (13) in Abhängigkeit von der Dämpfung des Turbosatzes gewichtetes Ausgangssignal des Verzögerungsgliedes (12) wird von dessen Eingangssignal subtrahiert und die Differenz einem vierten, die Proportionalverstärkung des Leistungsreglers bildenden Proportionalglied (15) zugeführt;
c) das Ausgangssignal des vierten Proportionalgliedes (15) wird zum Ausgangssignal des gemeinsamen Integrators (2) addiert, welcher eine Integrierzeit ($T_2$) aufweist, die proportional zur Zeitkonstanten ($T_1$) des Verzögerungsgliedes und der Verstärkung ($K_1$) des ersten Proportionalgliedes (1) und umgekehrt proportional zur Verstärkung ($K_4$) des vierten Proportionalgliedes (15) ist.
3. Regeleinrichtung nach Anspruch 1 oder 2, dadurch gekennzeichnet, daß das Ausgangssignal des ersten Proportionalgliedes (1) den Eingang des Integrators über eine Minimalwert-Auswahlschaltung (MIN) beaufschlagt, deren zweitem Eingang die Differenz zwischen einem konstantem Drehzahlgrenzwert ($f_G$) und dem Drehzahl-Sollwert ($f^*$) des Turbogenerators (6, 7) zugeführt ist.
4. Regeleinrichtung nach einem der vorhergehenden Ansprüche, dadurch gekennzeichnet, daß der Eingang des Leistungsreglers gleichzeitig mit dem Öffnen eines den Generator (7) mit dem Netz (N) verbindenden Schalters (8) ab- bzw. umgeschaltet wird.

## Claims

1. Control device for turbogenerators with a speed and a power controller, each of which has integral behaviour, characterised by the following features:
a) the integral part of the speed and the power controller is formed by means of a common integrator (2);
b) a signal derived from the power deviation ($e_p$) acts by way of a first proportional element (1) on the input of the common integrator (2), to which in addition the speed deviation ($e_f$) is fed directly in an additive manner;
c) the speed deviation ($e_f$) is, moreover, fed to the input of a second proportional element (5) which forms the proportional amplification ($K_2$) of the speed controller and the output signal of which is added in a combining element (3) to the output signal of the common integrator (2), the aggregate output signal of the combining element (3) serving as a correcting variable (y) or as a rated positional value ($S^*$).
2. Control device according to claim 1, characterised by the following features:
a) the power deviation ($e_p$) is fed to the first proportional element (1) by way of a first order delay element (12), the time constant ($T_1$) of which corresponds to the reciprocal of the resonance frequency of the turbogenerator (6, 7);

b) an output signal of the delay element (12), weighted by means of a third proportional element (13) as a function of the damping of the turbo set, is subtracted from the input signal of said delay element (12) and the difference is fed to a fourth proportional element (15) forming the proportional amplification of the power controller;

c) the output signal of the fourth proportional element (15) is added to the output signal of the common integrator (2) which has an integrating time $(T_2)$ which is proportional to the time constant $(T_1)$ of the delay element and the amplification $(K_1)$ of the first proportional element (1) and is inversely proportional to the amplification $(K_4)$ of the fourth proportional element (15).

3. Control device according to claim 1 or 2, characterised in that the output signal of the first proportional element (1) acts upon the input of the integrator by way of a minimum value selecting circuit (MIN), to the second input of which is fed the difference between a constant speed limiting value $(f_G)$ and the rated speed value $(f^*)$ of the turbogenerator (6, 7).

4. Control device according to one of the preceding claims, characterised in that the input of the power controller is switched off or switched over simultaneously with the opening of a switch (8) connecting the generator (7) with the network (N).

**Revendications**

1. Dispositif de régulation de turbogénérateurs comportant un régulateur de la vitesse de rotation et un régulateur de la puissance, qui possèdent chacun un comportement intégral, remarquable par les caractéristiques suivantes:

a) la partie intégrale du régulateur de la vitesse de rotation et du régulateur de la puissance est formée au moyen d'un intégrateur commun (2);

b) un signal dérivé de l'écart de puissance $(e_p)$ agit par l'intermédiaire d'un premier circuit à action proportionnelle (1) sur l'entrée de l'intégrateur commun (2), auquel est en outre envoyé directement, de façon additive, l'écart $(e_f)$ de la vitesse de rotation;

c) l'écart $(e_f)$ de la vitesse de rotation est en outre envoyé à l'entrée d'un second circuit à action proportionnelle (5), qui forme l'amplification proportionnelle $(K_2)$ du régulateur de la vitesse de rotation et dont le signal de sortie est ajouté, dans un circuit mélangeur (3), au signal de sortie de l'intégrateur commun (2), le signal de sortie somme du circuit mélangeur (3) étant utilisé en tant que grandeur de réglage (y) ou en tant que valeur de consigne de position $(S^*)$.

2. Dispositif de régulation suivant la revendication 1, caractérisé par les caractéristiques suivantes:

a) l'écart de puissance $(e_p)$ est envoyé au premier circuit à action proportionnelle (1) par l'intermédiaire d'un circuit de retardement du premier ordre (12), dont la constante de temps $(T_1)$ correspond à l'inverse de la fréquence de résonance du turbogénérateur (6, 7);

b) un signal de sortie du circuit de retardement (12), pondéré au moyen d'un troisième circuit à action proportionnelle (13) en fonction de l'amortissement du turbogénérateur, est soustrait du signal d'entrée de ce circuit de retardement et la différence est envoyé à un quatrième circuit à action proportionnelle (15) formant l'amplification proportionnelle du régulateur de puissance;

c) le signal de sortie du quatrième circuit à action proportionnelle (15) est additionné au signal de sortie de l'intégrateur commun (2) qui possède un temps d'intégration $(T_2)$ qui est proportionnel à la constante de temps $(T_1)$ du circuit de retard et à l'amplification $(K_1)$ du premier circuit à action proportionnelle (1) et inversement proportionnel à l'amplification $(K_4)$ du quatrième circuit à action proportionnelle (15).

3. Dispositif de régulation suivant la revendication 1 ou 2, caractérisé par le fait que le signal de sortie du premier circuit à action proportionnelle (1) charge l'entrée de l'intégrateur par l'intermédiaire d'un circuit (MIN) de sélection de la valeur minimale, à la seconde entrée duquel est envoyée la différence entre une valeur limite constante de la vitesse de rotation $(f_G)$ et la valeur de consigne $(f^*)$ de la vitesse de rotation du turbogénérateur (6, 7).

4. Dispositif de régulation suivant l'une des revendications précédentes, caractérisé par le fait que l'entrée du régulateur de puissance est débranchée ou commutée en même temps que l'ouverture d'un interrupteur (8) reliant le générateur (7) au réseau (N).

EP 0 212 417 B1

FIG 1

FIG 2

EP 0 212 417 B1

FIG 3

FIG 4